# EUROPÄISCHE PATENTANMELDUNG

(11) **EP 2 017 130 A1**
(43) Veröffentlichungstag der Anmeldung: **21.01.2009**
(21) Anmeldenummer: 08012728.5
(22) Anmeldetag: 15.07.2008
(51) Int. Cl.: B60R 9/055

(54) **Dachbox mit Gelenkbügel**

(30) Priorität: 20.07.2007 DE 102007034429
(71) Anmelder: Kamei GmbH & Co. KG., 38448 Wolfsburg (DE)
(72) Erfinder: Wäke, Arno, 38471 Rühen (DE)
(74) Vertreter: Rehmann, Thorsten

(57) **Zusammenfassung**

Eine Dachbox für Fahrzeuge, bestehend aus einer Unterschale (1) und einer hieran über mindestens einen Gelenkbügel (21) schwenkbar befestigten Oberschale (2), die zwischen sich einen Stauraum ausbilden, wobei der Gelenkbügel (21) zwei an ihrem einen Ende miteinander verbundene Arme (15, 16) aufweist, und der erste Arm (15) mit seinem freien Ende an der Oberschale (2) und der zweite Arm (16) mit seinem freien Ende an der Unterschale (1) drehbar befestigt ist, zeichnet sich dadurch aus, dass die Verbindung zumindest eines der Arme (15, 16) mit der Oberschale (2) bzw. Unterschale (1) werkzeuglos lösbar ist.

## Beschreibung

Die Erfindung betrifft eine Dachbox für Fahrzeuge, bestehend aus einer Unterschale und einer hieran über mindestens einen Gelenkbügel schwenkbar befestigten Oberschale, die zwischen sich einen Stauraum ausbilden, wobei der Gelenkbügel an ihren einen Enden miteinander verbundene Arme aufweist, und der erste Arm mit seinem anderen Ende an der Oberschale und der zweite Arm mit seinem anderen Ende an der Unterschale schwenkbar befestigt ist.

Die Dachboxen gibt es in verschiedenen Größen. Das Volumen des Stauraumes wird vielfach durch die Größe der Oberschale bestimmt, wobei unterschiedlich große Oberschalen mit an sich identisch ausgebildeten Unterschalen verbunden werden können. Die beiden Arme des Gelenkbügels sind herkömmlich mit der Oberschale bzw. der Unterschale beweglich vernietet. Es ist deshalb nicht ohne weiteres möglich, den Stauraum durch Verwendung unterschiedlicher Oberschalen an den Bedarfsfall anzupassen. Ist der Dachkoffer beispielsweise durch Steinschlag oder ähnliches beschädigt und muss deshalb eine der Schalen ersetzt werden, ist zum Lösen der Befestigung der Gelenkbügel Spezialwerkzeug notwendig, so dass der Dachkoffer in aller Regel ins Werk eingeschickt werden muss.

Von dieser Problemstellung ausgehend soll der gattungsgemäße Dachkoffer so verbessert werden, dass ein einfacher Austausch der Schalen möglich ist, um den Stauraum rasch an den jeweiligen Bedarfsfall anpassen zu können bzw. eine Reparatur des Dachkoffers nach einer Beschädigung bzw. Zerstörung der Schalen kostengünstig zu ermöglichen.

Zur Problemlösung zeichnet sich die gattungsgemäße Dachbox dadurch aus, dass die Verbindung zumindest eines der Arme mit der Oberschale bzw. der Unterschale werkzeuglos lösbar ist.

Durch diese Ausgestaltung kann der Endbenutzer nur durch körperlichen Einsatz seiner Hände die Verbindung zwischen Ober- und Unterschale lösen und beispielsweise eine kleinere Oberschale aufsetzen, wenn im Winter beispielsweise nur Ski transportiert werden sollen, so dass der Luftwiderstand des Fahrzeuges und damit die Betriebskosten reduziert werden, bzw. umgekehrt, wenn voluminöses Gepäck im Sommerurlaub transportiert werden muss, eine größere Oberschale anbringen, um unter Inkaufnahme des höheren Luftwiderstandswertes des Fahrzeuges einen entsprechend großen Stauraum zu schaffen.

Vorzugsweise ist die Verbindung des zumindest einen Armes mittels einer an der Oberschale bzw. Unterschale befestigten Kugelkopfes und einer in dem Arm gelagerten Kugelpfanne herstellbar, wobei die Kugelpfanne an einem gegen eine Federkraft relativ zum Arm verschiebbaren, seitlich über den Arm herausstehenden Stift ausgebildet ist, der Stift unverlierbar im Arm gelagert ist, und die Federkraft die Kugelpfanne gegenüber dem Kugelkopf in ihre Schließstellung zwingt.

Der Kugelkopf kann an einer mit der Oberschale bzw. Unterschale verbindbaren Platte ausgebildet sein. Dadurch ist eine einfache Befestigung des Kugelkopfes an der Schale möglich und das Bauteil ist kostengünstig als Spritzgussteil herstellbar.

Vorzugsweise ist der Stift im Querschnitt im Wesentlichen rechteckig ausgebildet und weist an seinem Ende zwei elastisch federnde Widerhaken auf. Die Aufnahmebohrung, die hierzu im Querschnitt ebenfalls im Wesentlichen rechteckig ausgebildet ist, ist insbesondere vorzugsweise eine Stufenbohrung. Über die elastisch federnden Widerhaken, die mit in der Stufenbohrung ausgebildeten Hinterschnitten zusammenwirken, kann der Stift unverlierbar in der Aufnahmebohrung der Arme aufgenommen werden.

Wenn der Stift auf seiner der Kugelpfanne gegenüberliegenden Seite einen eine Anschlagfläche ausbildenden Vorsprung aufweist, kann zwischen den Vorsprung und einer Grundfläche der Stufenbohrung eine Druckfeder eingesetzt werden, die den Stift in seine Sperrstellung für den Kugelkopf zwingt.

Hierzu schließt sich vorzugsweise in Richtung der Widerhaken an die Kugelpfanne eine Ausnehmung mit sich in Längsrichtung des Stiftes erstreckenden Stegen an. Diese Stege greifen in der Blockierstellung in den durch den Kugelkopf gebildeten Hinterschnitt ein und sichern den Kugelkopf in der Aufnahmebohrung.

Mit Hilfe einer Zeichnung soll ein Ausführungsbeispiel der Erfindung nachfolgend näher erläutert werden.

Es zeigt:

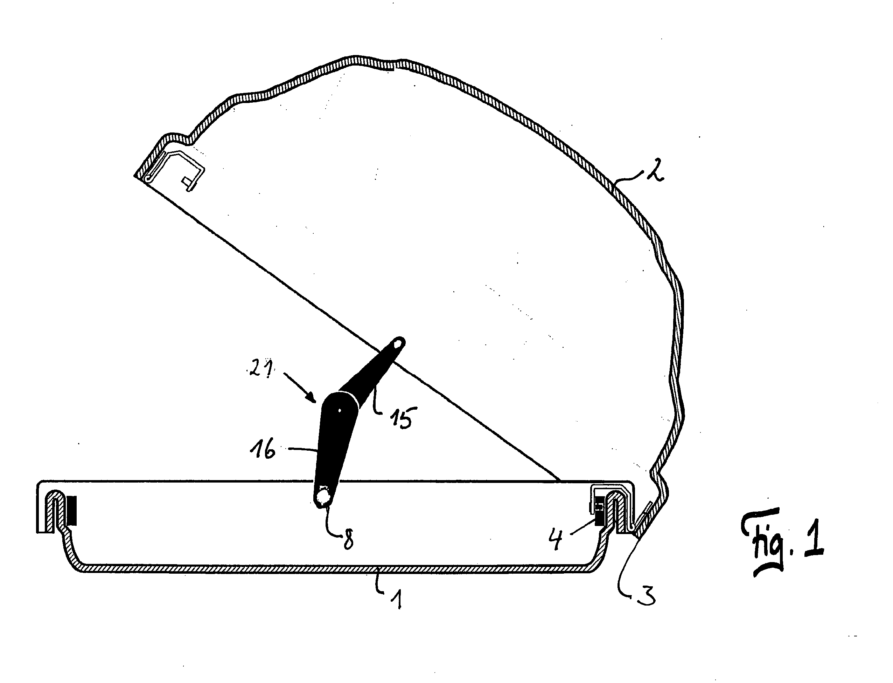

- Figur 1: die Frontansicht einer Dachbox in geöffneter Stellung im Schnitt;

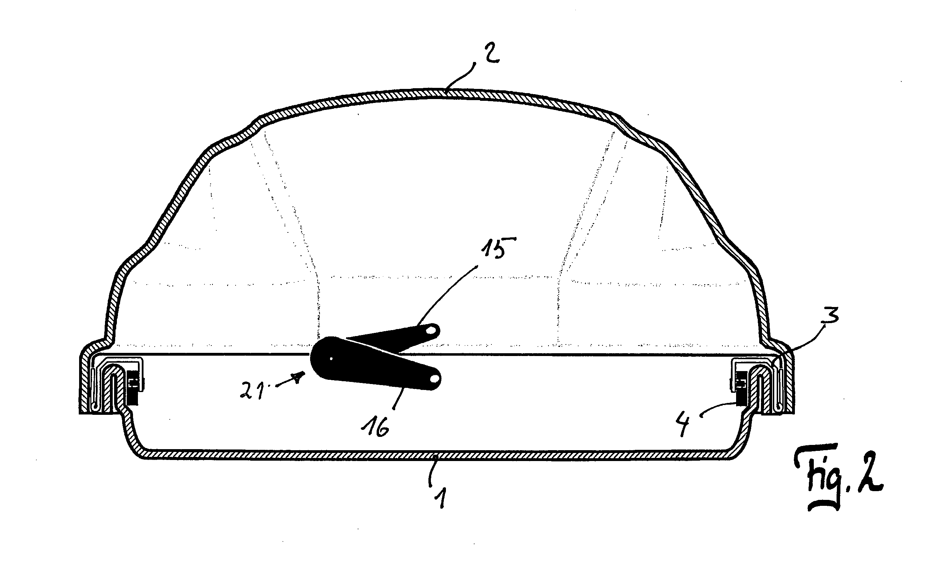

- Figur 2: die Ansicht nach Figur 1 in geschlossener Stellung;
- Figur 3: einen Teilschnitt aus Figur 1 mit verriegeltem Kugelkopf;
- Figur 4: den Teilschnitt nach Figur 3 mit dem Kugelkopf in der Offenstellung;

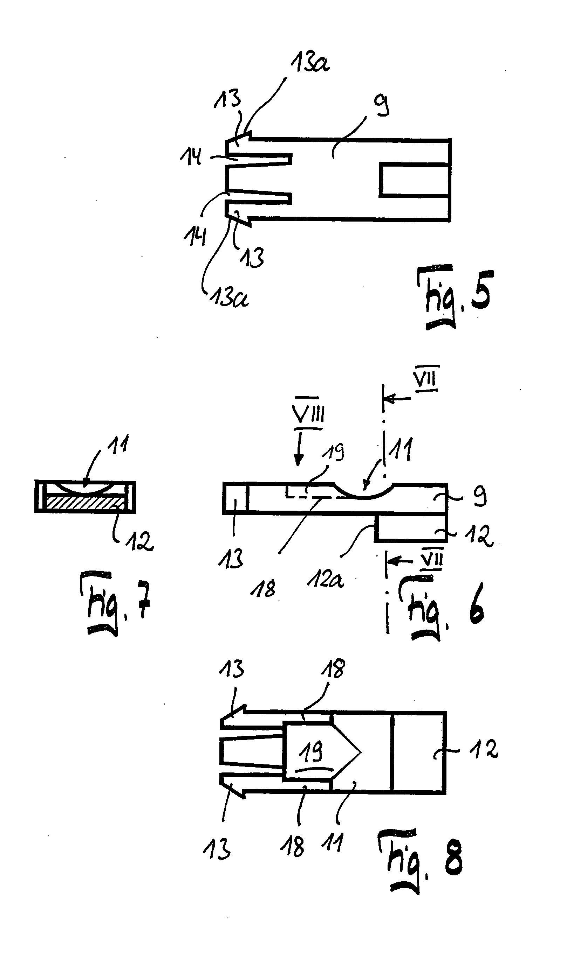

- Figur 5: die Draufsicht auf den mit der Kugelpfanne versehenen Stift;
- Figur 6: die Ansicht des Stiftes nach Figur 5;
- Figur 7: den Schnitt entlang der Linie VII-VII nach Figur 6;
- Figur 8: die Ansicht gemäß Sichtpfeil VIII nach Figur 6;

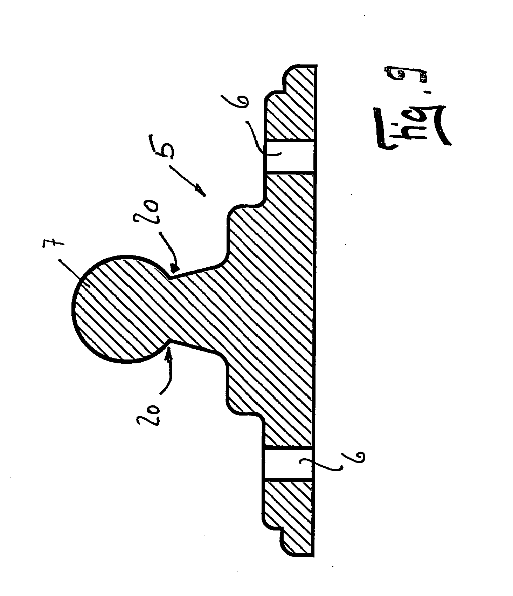

- Figur 9: die Kugelkopfplatte mit Schnitt;
- Figur 10: einen Gelenkbügel im Längsschnitt in einer ersten Stellung;
- Figur 11: einen Längsschnitt des Gelenkbügels gemäß Sichtpfeil XI nach Figur 10;
- Figur 12: den Gelenkbügel im Längsschnitt in einer zweiten Endstellung.

Die Dachbox besteht aus der wannenförmigen Unterschale 1, die über ein hier nicht dargestelltes Trägersystem am Fahrzeugdach befestigt werden kann, und der den aufklappbaren Deckel bildenden Oberschale 2. An den beiden sich gegenüberliegenden Längsseiten sind die Oberschale 2 und die Unterschale 1 über mehrere nebeneinander angeordnete Schließbügel 3 und Schlösser 4 miteinander verbunden.

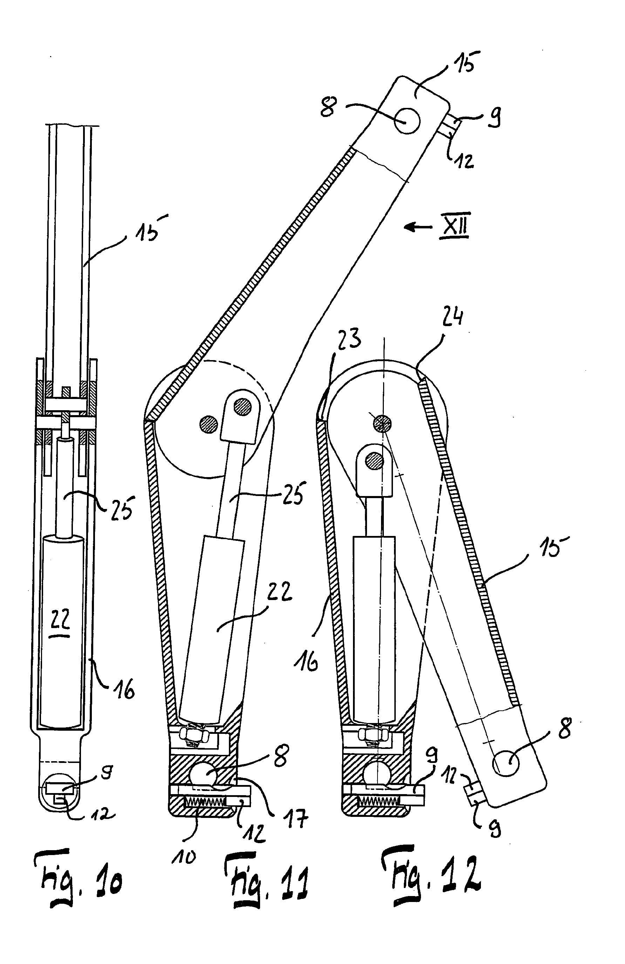

An den beiden Stirnseiten ist die Dachbox mit je einem Gelenkbügel 21 versehen, der aus zwei gelenkig miteinander verbundenen Armen 15 und 16 besteht. Der eine Arm 15 ist mit seinem freien Ende mittig an der Oberschale 2 und der andere Arm 16 mit seinem freien Ende mittig an der Unterschale 1 befestigt. An dem Arm 15 ist die Kolbenstange 25 einer Gasdruckfeder 22 gelenkig befestigt. Mit ihrem der Kolbenstange 25 gegenüberliegenden Ende stützt sich die Gasdruckfeder 22 im Inneren des Armes 16 ab. Über Anschläge 23, 24 ist der Schwenkweg der Arme 15, 16 zueinander begrenzt. Die Gasdruckfeder 22 hat die Aufgabe, die Öffnungsbewegung der Oberschale 2 zu unterstützen bzw. die Oberschale 2 nach ihrer Entriegelung von der Unterschale 1 selbsttätig aufzuklappen (vgl. Figuren 10 bis 12).

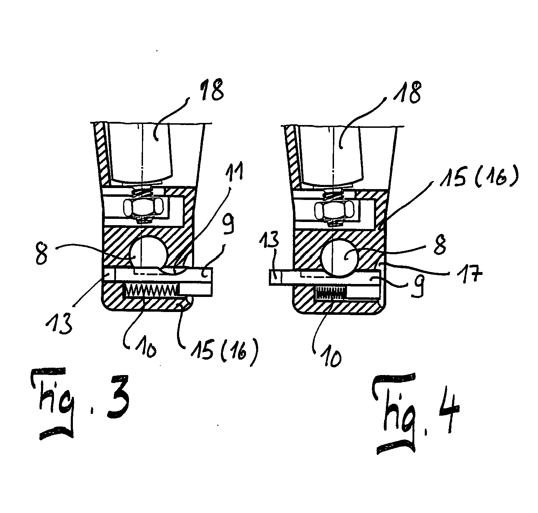

Die Verbindung der Arme 15 und 16 mit der Oberschale 2 bzw. der Unterschale 1 erfolgt über eine Kugelkopfplatte 5, die in über ihr vorgesehene Bohrungen 6 mit der jeweiligen Schale 1, 2 vernietet ist. Von der Kugelkopfplatte 5 ragt in üblicher Ausgestaltung der Kugelkopf 7 hervor. An den freien Enden der Arme 15, 16 ist, wie Figuren 3 und 4 zeigen, unterhalb der Aufnahmebohrung 8 der die Kugelpfanne 11 tragende Stift 9 gegen die Kraft einer Druckfeder 10 unverlierbar in einer quer zur Aufnahmebohrung 8 verlaufenden Bohrung 17 gelagert. Der Stift 9 ist plattenförmig ausgebildet. An seinem einen Ende ist er mit Widerhaken 13 versehen, die durch im Stift 9 vorgesehene Schlitze in Richtung aufeinander zugedrückt werden können. Die Bohrung 17 ist stufenlos ausgebildet und entspricht in ihrer Kontur im Wesentlichen dem rechteckigen Querschnitt des Stiftes 9. Wird der Stift 9 in die Bohrung 17 hineingedrückt, bewirken die Anlaufschrägen 13a, dass die Widerhaken 13 zusammengedrückt werden und der Stift 9 eingeführt werden kann. Im hinteren Ende erweitert sich die Bohrung 17 und bildet in bekannter Weise einen nicht dargestellten Hinterschnitt aus. Die Widerhaken 13 federn in den Hinterschnitt auseinander und der Stift 9 ist unverlierbar in der Bohrung 17 gelagert. Vom Stift 9 ragt nach unten ein Vorsprung 12 hervor, der eine Anschlagfläche 12a für die in der Bohrung 17 sich abstützenden Druckfeder 10 bildet. Gegenüber dem Vorsprung 12 ist im Stift 9 die Kugelpfanne 11 ausgebildet, die im Radius dem Radius der Aufnahmebohrung 8 entspricht. Wird der Stift 9 in die Bohrung 17 manuell hineingedrückt, gelangt die Kugelpfanne 11 in Überdeckung mit der Aufnahmebohrung 8 und es bildet sich eine runde Durchgangsbohrung aus, die den Kugelkopf 7 der Kugelkopfplatte 5 aufnehmen kann (vgl. Figur 4). Wird der Stift 9 losgelassen, drückt die Druckfeder 10 diesen in seine Ausgangslage zurück und der Querschnitt der Aufnahmebohrung 8 wird über die Stege 18 der Ausnehmung 19 reduziert. Der Grund der Ausnehmung 19 weist im Wesentlichen denselben Radius wie die Kugelpfanne 11 bzw. der Kugelkopf 7 auf. In der in Figur 3 gezeigten Stellung greifen die Vorsprünge 12 in den vom Kugelkopf 7 gebildeten Hinterschnitt 20 in der Platte 5 ein und fixieren die Arme 15, 16 an der Oberschale 2 bzw. der Unterschale 1.

Soll der Gelenkbügel 21 gelöst werden, werden die Stifte 9 gegen die Kraft der Druckfeder 10 bewegt (Figur 4) und die Arme 15, 16 können von der Kugelkopfplatte 5, die an der Oberschale 2 bzw. der Unterschale 1 befestigt ist, gelöst werden. Dann kann eine andere Oberschale 2 aufgesetzt werden, an der ebenfalls eine Kugelkopfplatte 5 befestigt ist, die dann in der vorbeschriebenen Weise mit den Armen 15, 16 des Gelenkbügels 21 verbunden wird.

### Bezugszeichenllste:

- 1: Unterschale
- 2: Oberschale
- 3: Schließbügel
- 4: Schloss
- 5: Kugelkopfplatte
- 6: Bohrung
- 7: Kugelkopf
- 8: Aufnahmebohrung
- 9: Stift
- 10: Druckfeder
- 11: Kugelpfanne
- 12: Vorsprung
- 12a: Anschlagfläche
- 13: Widerhaken
- 13a: Anlaufschräge
- 14: Schlitz
- 15: Arm
- 16: Arm
- 17: Bohrung
- 18: Steg
- 19: Ausnehmung
- 20: Hinterschnitt
- 21: Gelenkbügel
- 22: Gasdruckfeder
- 23: Anschlag
- 24: Anschlag
- 25: Kolbenstange

## Patentansprüche

1. Dachbox für Fahrzeuge, bestehend aus einer Unterschale (1) und einer hieran über mindestens einen Gelenkbügel (21) schwenkbar befestigten Oberschale (2), die zwischen sich einen Stauraum ausbilden, wobei der Gelenkbügel (21) zwei an ihrem einen Ende miteinander verbundene Arme (15, 16) aufweist, und der erste Arm (15) mit seinem freien Ende an der Oberschale (2) und der zweite Arm (16) mit seinem freien Ende an der Unterschale (1) schwenkbar befestigt ist, **dadurch gekennzeichnet, dass** die Verbindung zumindest eines der Arme (15, 16) mit der Oberschale (2) bzw. Unterschale (1) werkzeuglos lösbar ist.

2. Dachbox nach Anspruch 1, **dadurch gekennzeichnet, dass** die Verbindung des zumindest einen Armes (15, 16) mittels eines an der Oberschale (2) bzw. Unterschale (1) befestigten Kugelkopfes (7) und einer in dem Am beweglich gelagerten Kugelpfanne (11) herstellbar ist, dass die Kugelpfanne (11) an einem gegen eine Federkraft relativ zum Arm (15, 16) verschiebbaren, seitlich über den Arm (15, 16) herausstehenden Stift (9) ausgebildet ist, und dass der Stift (9) zur Verriegelung des Kugelkopfes (7) Stege (18) aufweist und unverlierbar im Arm (15, 16) gelagert ist, und dass die Federkraft die Kugelpfanne (11) gegenüber dem Kugelkopf (7) in ihre Schließstellung zwingt.

3. Dachbox nach Anspruch 1 oder 2, **dadurch gekennzeichnet, dass** der Kugelkopf (7) an einer mit der Oberschale (2) bzw. Unterschale (1) verbindbaren Kugelkopfplatte (5) ausgebildet ist.

4. Dachbox nach Anspruch 2, **dadurch gekennzeichnet, dass** der Stift (9) im Querschnitt im Wesentlichen rechteckig ausgebildet ist und an seinem einen Ende zwei elastisch federnde Widerhaken (13) aufweist.

5. Dachbox nach Anspruch 2 oder 4, **dadurch gekennzeichnet, dass** der Stift (9) auf seiner der Kugelpfanne (11) gegenüberliegenden Seite einen eine Anschlagfläche (12a) ausbildenden Vorsprung (12) aufweist.

6. Dachbox nach Anspruch 4 oder 5, **dadurch gekennzeichnet, dass** sich in Richtung der Widerhaken (13) an die Kugelpfanne (11) eine Ausnehmung (19) mit sich in Längsrichtung des Stiftes (9) erstreckenden, nach oben ragenden Stegen (18) anschließt.

7. Dachbox nach Anspruch 2 oder 5, **dadurch gekennzeichnet, dass** der Stift (9) in einer quer zu einer Aufnahmebohrung (8) für den Kugelkopf (7) verlaufenden, den Querschnitt des Stiftes (9) angepassten Bohrung (17) angeordnet ist. '

8. Dachbox nach Anspruch 7, **dadurch gekennzeichnet, dass** die Bohrung (17) stufig ausgebildet ist und im Bereich des kleineren Querschnittes eine Druckfeder (10) angeordnet ist, die sich einerseits am Grund der Bohrung (17) und andererseits an der Anschlagfläche (12a) des Vorsprunges (12) abstützt.

9. Dachbox nach Anspruch 4, **dadurch gekennzeichnet, dass** die Widerhaken (13) mit in der Bohrung (17) ausgebildeten Hinterschnitten zusammenwirken, um den Stift (9) unverlierbar in dem Arm (15, 16) aufzunehmen.

10. Dachbox nach einem oder mehreren der vorstehenden Ansprüche, **dadurch gekennzeichnet, dass** der Kugelkopf (7) und der Stift (9) als Kunststoffspritzteil ausgebildet sind.
